# EUROPEAN PATENT APPLICATION

(11) **EP 3 716 248 A1**
(43) Date of publication of application: **30.09.2020**
(21) Application number: 20165421.7
(22) Date of filing: 24.03.2020
(51) Int. Cl.: G08G 5/04, G08G 5/00, G01S 13/95

(54) **SYSTEMS AND METHODS FOR DYNAMICALLY DETECTING MOVING OBJECT TRAJECTORY CONFLICT USING ESTIMATED TIMES OF ARRIVAL**

(30) Priority: 29.03.2019 US 201962826649 P; 18.03.2020 US 202016822440
(71) Applicant: Honeywell International Inc., Morris Plains, NJ 07950 (US)
(72) Inventor: DE VILLELE, Dorothee, Morris Plains, NJ New Jersey 07950 (US); LEWIS, Daniel E., Morris Plains, NJ New Jersey 07950 (US); BROWNLEE, Robert, Morris Plains, NJ New Jersey 07950 (US)
(74) Representative: Haseltine Lake Kempner LLP

(57) **Abstract**

Systems and methods are disclosed for dynamically detecting moving object trajectory conflict using estimated times of arrival. A method for dynamically detecting aircraft trajectory conflicts against a moving object may include: receiving, by one or more processors, one or more environmental inputs, the one or more environmental inputs including one or more object characteristic parameters of the moving object; determining, by the one or more processors, object movement data indicative of one or more projected movements of the moving object, based on the one or more environmental inputs; receiving, by the one or more processors, a flight trajectory of an aircraft; and dynamically determining, by the one or more processors, an aircraft estimated time of arrival at an intersection between the flight trajectory and the one or more projected movements of the moving object.

## Description

### TECHNICAL FIELD

Various embodiments of the present disclosure generally relate to communicating forthcoming conflicts between an aircraft and a moving object and, more particularly, to assisting aircraft crews with identifying forthcoming conflicts between an aircraft and a moving object with high accuracy and reliability.

### BACKGROUND

Identifying conflicts between an aircraft trajectory (e.g., a reference flight plan) and a path of a moving object (e.g., weather hazard, other aircraft, etc.) is among the most safety-critical tasks for the crew of an aircraft. The role of such tasks is becoming increasingly more essential because of the increasing demand from various systems and subsystems of aircraft equipment (e.g., flight management system (FMS), connected FMS (cFMS), avionics components, etc.) for path conflict data. Thus, it may be highly desirable for an aircraft to implement a process for effectively and accurately outputting conflict detection information to other systems, functions, clients, or services associated with aircraft. Additionally, it may be highly desirable for such process to provide conflict detection data with enhanced reliability and transparency, while reducing crew workload.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods disclosed relate to assisting aircraft crews with identifying forthcoming conflicts between an aircraft and a moving object with high accuracy and reliability.

In one embodiment, a computer-implemented method for dynamically detecting aircraft trajectory conflicts against a moving object is disclosed. The method may include: receiving, by one or more processors, one or more environmental inputs, the one or more environmental inputs including one or more object characteristic parameters of the moving object; determining, by the one or more processors, object movement data indicative of one or more projected movements of the moving object, based on the one or more environmental inputs; receiving, by the one or more processors, a flight trajectory of an aircraft; and dynamically determining, by the one or more processors, an aircraft estimated time of arrival at an intersection between the flight trajectory and the one or more projected movements of the moving object.

In another embodiment, a computer system for dynamically detecting aircraft trajectory conflicts against a moving object is disclosed. The computer system may include: a memory having processor-readable instructions stored therein; and at least one processor configured to access the memory and execute the processor-readable instructions, which when executed by the processor configures the processor to perform a plurality of functions, including functions for: receiving one or more environmental inputs, the one or more environmental inputs including one or more object characteristic parameters of the moving object; determining object movement data indicative of one or more projected movements of the moving object, based on the one or more environmental inputs; receiving a flight trajectory of an aircraft; and dynamically determining an aircraft estimated time of arrival at an intersection between the flight trajectory and the one or more projected movements of the moving object.

In yet another embodiment, a non-transitory computer-readable medium containing instructions for dynamically detecting aircraft trajectory conflicts against a moving object is disclosed. The instructions may include instructions for: receiving, by one or more processors, one or more environmental inputs, the one or more environmental inputs including one or more object characteristic parameters of the moving object; determining, by the one or more processors, object movement data indicative of one or more projected movements of the moving object, based on the one or more environmental inputs; receiving, by the one or more processors, a flight trajectory of an aircraft; and dynamically determining, by the one or more processors, an aircraft estimated time of arrival at an intersection between the flight trajectory and the one or more projected movements of the moving object.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an example environment in which methods, systems, and other aspects of the present disclosure may be implemented, according to one or more embodiments.
FIG. 2 depicts a diagram of an overview of an example implementation described herein, according to one or more embodiments.
FIG. 3 depicts a diagram of an example implementation of dynamically determining reliability metrics, according to one or more embodiments.
FIG. 4 depicts a flow diagram in which methods, systems, and other aspects of the present disclosure may be implemented, according to one or more embodiments.
FIG. 5 depicts an exemplary method dynamically detecting aircraft trajectory conflicts against a moving object, according to one or more embodiments.
FIG. 6 depicts an exemplary computer device or system, in which embodiments of the present disclosure, or portions thereof, may be implemented.

### DETAILED DESCRIPTION

The following embodiments describe methods and systems for dynamically detecting aircraft trajectory conflicts against a moving object. As described above, there is a need to implement a process for effectively and accurately outputting conflict detection information to other systems, functions, clients, or services associated with aircraft. Additionally, it may be highly desirable for such process to provide conflict detection data with enhanced reliability and transparency, while reducing crew workload. As described in more detail below, such needs can be met by analyzing path conflict detections and resolutions at different temporal points (e.g., mid-term and long-term resolutions) of an aircraft path, for example in a 4-D state, and simultaneously assessing and outputting reliability metrics of the analysis based on uncertainty and/or variability of the parameters fed into the analysis.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

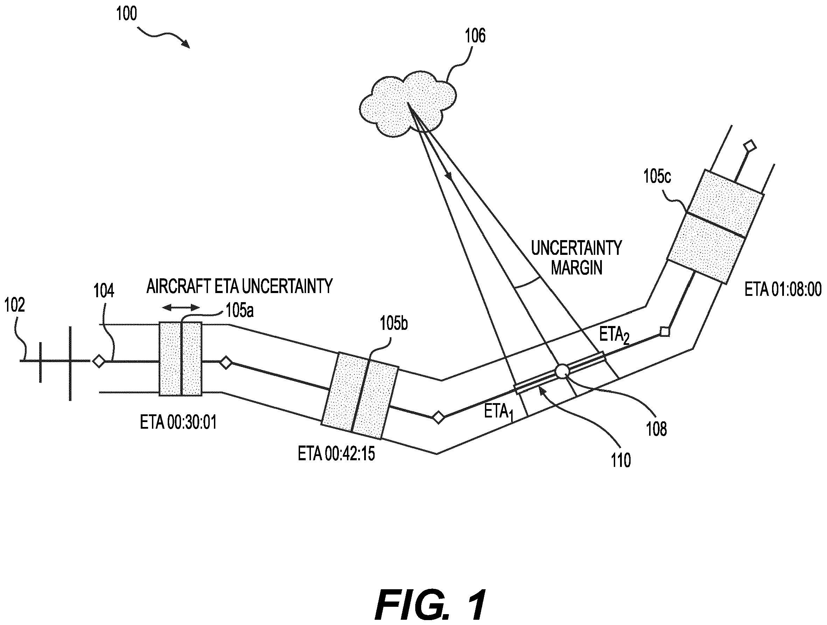

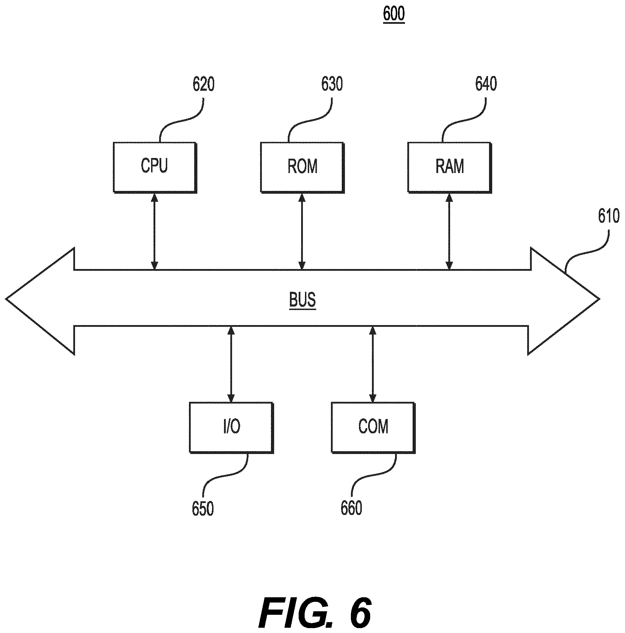

Referring now to the appended drawings, FIG. 1 depicts an example environment 100 in which methods, systems, and other aspects of the present disclosure may be implemented, according to one or more embodiments. A vehicle, such as an aircraft 102, may be moving along a predetermined flight trajectory 104 (e.g., a reference business trajectory (RBT) as shown in FIG. 1). By applying the characteristics of aircraft 102 movement (e.g., speed, direction, capabilities, schedule, etc.), with the locational coordinates of the flight trajectory 104, a computing system (e.g., a computing system at an airborne mission manager, a ground mission manager, a ground control center, and/or an on-board computing system on aircraft), such as computing system 600 depicted in FIG. 6, may determine and store four-dimensional (4-D) coordinates of the flight trajectory 104. For example, estimated times of arrival 105a-105c (ETAs) of the aircraft 102, as shown in FIG. 1, may serve as a dimension being added to at least some of the 3-D locational coordinates. The ETAs 105a-105c may include an aircraft ETA uncertainty (shown by the shaded portions of ETAs 105a-105c in FIG. 1). However, taking ETAs 105a-105c into account may significantly reduce uncertainty associated with a movement path prediction and accurate conflict prediction arising from it. It is understood that ETAs 105a-105c are exemplary only and any ETA (and any number of ETAs) of aircraft 102 along trajectory 104 may be used.

The computing system 600 may evaluate a potential interception of a moving object 106 (e.g., a moving weather condition as depicted in FIG. 1) with flight trajectory 104. The computing system 600 may be in communication with various detectors and/or detection techniques, such as, for example, WXR radar (weather radar), a transmitter communicating with other systems or operators for receiving or exchanging data (e.g., forecast data) over one or more networks, internal or external sensors, internal or external detectors, aircraft LRUs (line replaceable units), etc. Using such detectors and/or detection techniques, various input parameters may be received, in order for the computing system 600 to analyze potential path conflicts between aircraft 102 and moving object 106.

For analyzing the potential path conflicts with a particular moving object 106, the computing system 600 may receive inputs including, for example, location of the moving object 106 (e.g., 3-D location), speed vector of the moving object 106 (e.g., 3-D vector, or a vector resulting from a computation based on two or more successive records of a weather layer), severity of the moving object 106, size of the moving object 106, and/or a trajectory 104 (e.g., RBT) of aircraft 102.

Using these inputs, the computing system 600 may identify a conflicting segment 108. As shown in FIG. 1, the conflicting segment 108 may be, for example, a predicted intercept center location, or a range associated with the predicted intercept center location. The conflicting segment 108 may be determined by, for example, identifying one or more intersections of the 4-D paths of the aircraft 102 (e.g., trajectory 104) and the moving object 106, or identifying a predicted intercept center location (e.g., conflicting segment 108) by dynamically computing (e.g., using speed vector, severity, and/or size) various 3-D locations of the moving object 106 based on time. Once the conflicting segment 108 is identified, the computing system 600 may compute a predicted ETA window 110 in which a conflict may occur along the trajectory 104 (e.g., the RBT). The computing of the predicted ETA window 110 may take into account uncertainty margin or a margin of error, as shown in FIG. 1. A conflict predicted time and conflict severity data may also be computed along with the conflicting segment 108 and the predicted ETA window 110. For example, the conflict predicted time may be the most likely time of conflict (e.g., time associated with the predicted intercept center location shown in FIG. 1), within the predicted ETA window. The conflict severity data may be, for example, severity data of the moving object 106 corresponding specifically to the conflicting segment 108 and/or the conflict predicted time.

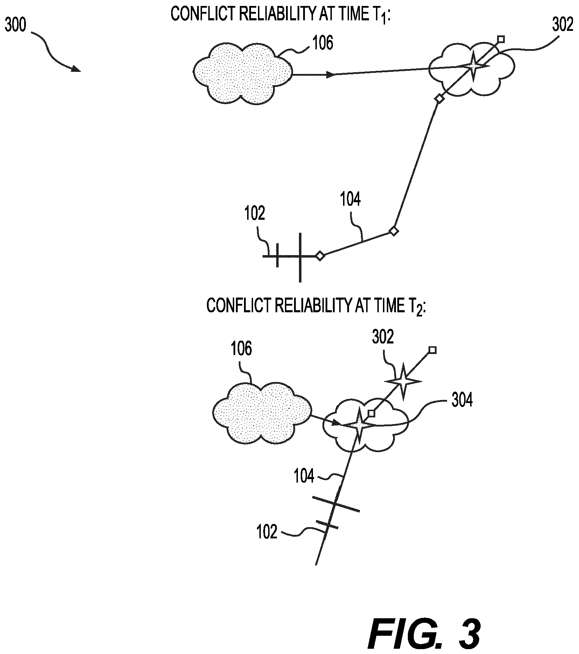

Once the conflict ETA window 110 is determined, the computing system 600 may compare the aircraft 102 ETA along the conflicting segment 108 with the predicted ETA window 110, and assess if a conflict may exist (e.g., yes/no and/or true/false). For example, the assessment may be based on a comparison of the aircraft 102 ETAs and the predicted ETA window 110 of the moving object 106. In response to determining that a conflict may exist (e.g., yes), the computing system 600 may also assess and output reliability metrics associated with the assessed conflict, based on various factors (e.g., time, aircraft location, prediction performances, etc.) as discussed in more detail with respect to FIG. 3. In response to determining that a conflict does not exist (e.g., no), the computing system may exit the conflict detection process for this particular moving object, or return to it at a later time periodically and/or dynamically.

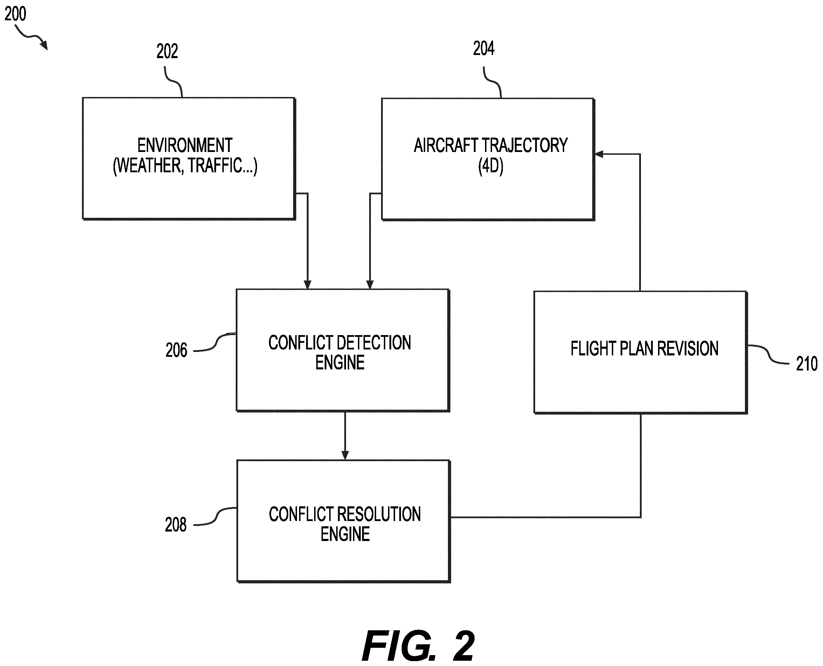

FIG. 2 depicts a diagram of an overview of an example implementation 200 described herein, according to one or more embodiments. As discussed above with respect to FIG. 1, the computing system 600 may receive, periodically and/or dynamically, one or more inputs 202-204. The inputs may include environmental inputs 202 and an aircraft trajectory 204 (e.g., trajectory 104). The environmental inputs 202 may include, for example, weather data (weather conditions potentially affecting a flight path) and/or traffic data (e.g., other aircraft in the shared airspace) associated with the aircraft 102. In addition, the environmental inputs 202 may include parameters specific to each moving object 106 (e.g., location of a moving object 106 in 3-D or 4D coordinates), speed vector of the moving object 106 (e.g., 3-D vector, or data indicative of two or more successive records of a weather layer), severity of the moving object 106, and size of the moving object 106. Further, an aircraft trajectory 204 may be among the inputs received by the computing system 600. The aircraft trajectory 204 may include, for example, flight trajectory 104 of the aircraft 102 (e.g., RBT), alternative flight paths of the aircraft 102, and/or 4-D representations of any of the flight paths associated with the aircraft 102.

In some implementations, the computing system 600 may host or communicate with multiple different software and/or hardware engines (e.g., conflict detection engine 206 and conflict resolution engine 208) with respective roles divided between conflict detection and conflict resolution. Under these implementations, the example steps discussed above with respect to FIG. 1 may be steps performed by the conflict detection engine 206. The inputs 202-204 associated with the moving object 106 and the aircraft trajectory (discussed above) may be received by the conflict detection engine 206. Additionally, data output by the conflict detection engine 206 may, for example, be called by, or pushed to, various other systems, functions, clients, or services associated with an aircraft 102. For the purpose of resolving path conflicts, the conflict detection engine 206 may feed output data into conflict resolution engine 208, in order to enable a definition of a flight plan or trajectory, that is, for example, free of any conflict and capable of being flown by the aircraft 102 with a low probability of re-routing or tactical intervention. If the computing system 600 determines (e.g., via the conflict detection engine 206) that an action is needed at the conflict resolution engine 208, then the conflict resolution engine 208 may determine the appropriate course of action and transmit the appropriate course of action back to an onboard computer of aircraft 102, such as a flight management system (FMS). For example, as shown in FIG. 2, the conflict resolution engine 208 may transmit a flight plan revision 210 back to a source of the aircraft trajectory data (e.g., FMS), and the revisions may, for example, generate a modified aircraft trajectory that is, in turn, periodically or dynamically fed into the conflict detection engine 206 in a subsequent iteration of the process depicted in FIG. 2. It is understood that the engines 206, 208 may be executed by a processor (e.g., CPU 620) of computer system 600 and may be combinable into a single engine/module and/or may each include multiple engines and/or modules.

FIG. 3 depicts a diagram of an example implementation 300 of dynamically determining reliability metrics, according to one or more embodiments. The reliability metrics may be indicative of a likelihood that the one or more dynamically determined conflict times and/or conflict locations are accurate predictions for the moving object 106 and the aircraft 102. Thus, the reliability metrics may vary according to the uncertainty of the aircraft ETAs 105a-105c in the predicted ETA window 110 discussed in detail with respect to FIG. 1 above. The reliability metrics may be indicative of at least two factors, such as, for example, (i) the uncertainly associated with motion of the aircraft 102, and (ii) the uncertainty associated with location and motion of the moving object 106. A weather condition included in the inputs 202-204 (e.g., a condition included in the environmental inputs discussed above with respect to FIG. 2), for example, may be forecast data from more than two hours ago, potentially causing variability in the location information of the weather condition. While on-board tools such as a WXR radar may be able to confirm the validity of location, movement rate, and/or trends in strength, size, or rates of the weather condition, assessing such an uncertainty may further enhance the accuracy and reliability of the conflict detection process.

The uncertainty of aircraft ETAs 105a-105c may increase as flight time and/or duration between the aircraft 102 and the moving object 106 increases. For example, the further aircraft 102 is away from moving object 106, the more uncertainty will exist. The degree of the uncertainty may differ based on performances and compliance standards associated with the particular aircraft 102. For example, if the airborne systems of an aircraft 102 are DO-236C compliant, especially with the RTA (required time of arrival) analysis capabilities, then insertion(s) of one or more down-path RTAs may facilitate with reducing the ETA uncertainties.

Accordingly, as shown in FIG. 3, the reliability metrics (e.g., metrics indicative of a likelihood that the one or more dynamic conflict times and the one or more conflict locations are accurate predictions for the moving object 106 and the aircraft 102) may decrease as a potential conflict is further down-path from the current aircraft 102 location (shown at time T₁ in FIG. 1). For example, the conflict predicted time 302 at time T₁ may include a low reliability due to the moving object 106 being further away from aircraft 102 and/or trajectory 104. In contrast, as the moving object 106 gets closer to the aircraft 102 and the trajectory 104 (e.g., the RBT), the reliability metrics may increase (shown at time T₂ in FIG. 1). Foe example, the conflict predicted time 302 may be updated as aircraft 102 moves along trajectory 104 and moving body 106 moves closer to aircraft 102 and/or trajectory 104, as detailed above. The updated conflict predicted time 304 may include a high reliability due to the moving object 106 being closer to the aircraft 102 and/or the trajectory 104.

The reliability metrics may provide valuable indications to the crew, by indicating a need to initiate rerouting immediately (e.g., high reliability indicating a high risk associated with a lack of immediate, corrective actions), or alternatively indicating a sign or an evidence to wait for evolution of the detected condition (e.g., weather condition) to, for example, avoid taking undue or costly corrective action. As shown in FIG. 3, the degree of being further down-path may be measured by conflict predicted time and/or predicted conflict location (e.g., latitude/longitude).

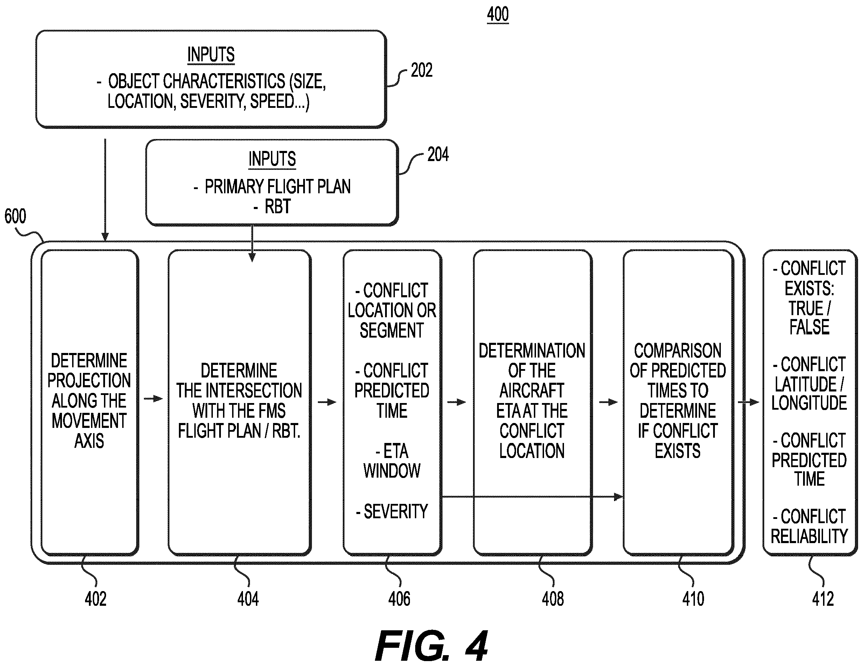

FIG. 4 depicts a flow diagram 400 in which methods, systems, and other aspects of the present disclosure may be implemented, according to one or more embodiments. An input 202 may be received, including object characteristics (size, location, severity, speed, etc.). In step 402, based on the inputs 202, computing system 600 may determine projections associated with a path of the moving object 106 (e.g., projection along the movement axis). The computing system 600 may also receive inputs 204 pertaining to flight path of the aircraft 102 associated with the computing system 600, such as a primary flight plan or the RBT 104, as detailed above. In step 404, based on both sets of inputs 202-204, as well as the determined projections associated with a path of the moving object 106 (step 402), the computing system 600 may determine the intersection of the path of the moving object 106 with a flight plan of the aircraft 102 (e.g., trajectory 104, such as FMS flight plan or the RBT). In step 406, based on the determination of the intersection (step 404), computing system 600 may produce various outputs, such as, for example, conflict location or segment 108, conflict predicted time, ETA window 110, and/or severity.

These outputs may then be used as input parameters for steps 408 and 410. In step 408, computing system 600 may determine the aircraft ETA at the conflict location. In step 410, computing system 600 may compare the predicted times (e.g., aircraft ETA at the conflict location, and the moving object's conflict time at the conflict segment) to determine if conflict may actually exist. In step 412, based on the comparison(step 410), computing system 600 may generate outputs, including, for example, an indication on whether or not a conflict exists (e.g., true/false), conflict latitude/longitude data, a conflict predicted time, and/or conflict reliability data.

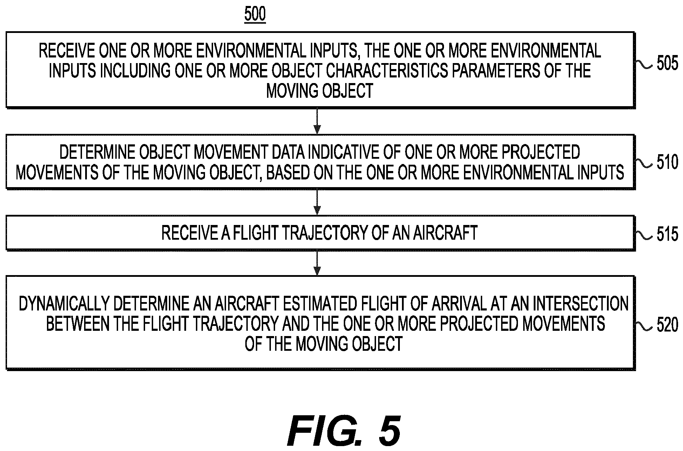

FIG. 5 depicts an exemplary method 500 for dynamically detecting aircraft trajectory conflicts against a moving object, according to one or more embodiments. In step 505, computing system 600 (e.g., one or more processors of computing system 600) may first receive one or more environmental inputs, the one or more environmental inputs including one or more object characteristics parameters of the moving object 106. The object characteristic parameters may include at least one of a size, location, severity, or speed of the moving object 106.

In step 510, the computing system 600 may determine object movement data indicative of one or more projected movements of the moving object 106t, based on the one or more environmental inputs. In step 515, the computing system 600 may receive a flight trajectory 104 of aircraft 102.

In step 520, the computing system 600 may dynamically determine an aircraft ETA at an intersection between flight trajectory 104 and moving object 106. For example, computing system 600 may determine the intersection based on the determined object movement data and the flight trajectory 104. The computing system 600 may determine a conflict segment 108 along the flight trajectory 104 and a conflict predicted time based on the intersection and then determine the aircraft 102 ETA at the conflict segment.

Computing system 600 may further compare the aircraft 102 ETA at the intersection (e.g., and a moving object 106 ETA at the intersection. Based on the comparing, the computing system 600 may determine whether a conflict exists between the aircraft 102 and the moving object 106. If a conflict exists, the computing system 600 may dynamically determine one or more reliability metrics, one or more dynamic conflict times, and one or more dynamic conflict locations. As detailed above, the reliability metrics may be indicative of a likelihood that the one or more dynamic conflict times and the one or more dynamic conflict locations are accurate predictions for the moving object 106 and the aircraft 102. Further, if a conflict exists, computing system 600 may also determine whether an action is required to resolve the conflict., determine the required action, and output the required action. In some embodiments, the required action may include computing system 600 modifying the flight trajectory 104 of the aircraft 102 to avoid the moving object 106.

FIG. 6 depicts an exemplary computer device or system, in which embodiments of the present disclosure, or portions thereof, may be implemented. Each of the computing system(s), databases, user interfaces, and methods described above with respect to FIGS. 1-5 can be implemented via device, such as computing system 600, using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGS. 1-5.

If programmable logic is used, such logic may be executed on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device.

For instance, at least one processor device and a memory may be used to implement the above-described embodiments. A processor device may be a single processor or a plurality of processors, or combinations thereof. Processor devices may have one or more processor "cores."

Various embodiments of the present disclosure, as described above in the examples of FIGS. 1-5, may be implemented using device 600. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the spirit of the disclosed subject matter.

As shown in FIG. 6, device 600 may include a central processing unit (CPU) 620. CPU 620 may be any type of processor device including, for example, any type of special purpose or a general-purpose microprocessor device. As will be appreciated by persons skilled in the relevant art, CPU 620 also may be a single processor in a multi-core/multiprocessor system, such system operating alone, or in a cluster of computing devices operating in a cluster or server farm. CPU 620 may be connected to a data communication infrastructure 610, for example, a bus, message queue, network, or multi-core message-passing scheme.

Device 600 also may include a main memory 640, for example, random access memory (RAM), and also may include a secondary memory 630. Secondary memory 630, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 630 may include other similar means for allowing computer programs or other instructions to be loaded into device 600. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 600.

Device 600 also may include a communications interface ("COM") 660. Communications interface 660 allows software and data to be transferred between device 600 and external devices. Communications interface 660 may include a modem, a network interface (such as an Ethernet card), a communications port, a PCMCIA slot and card, or the like. Software and data transferred via communications interface 660 may be in the form of signals, which may be electronic, electromagnetic, optical, or other signals capable of being received by communications interface 660. These signals may be provided to communications interface 660 via a communications path of device 600, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 600 also may include input and output ports 650 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented method for dynamically detecting aircraft trajectory conflicts against a moving object, comprising:
receiving, by one or more processors, one or more environmental inputs, the one or more environmental inputs including one or more object characteristic parameters of the moving object;
determining, by the one or more processors, object movement data indicative of one or more projected movements of the moving object, based on the one or more environmental inputs;
receiving, by the one or more processors, a flight trajectory of an aircraft; and
dynamically determining, by the one or more processors, an aircraft estimated time of arrival at an intersection between the flight trajectory and the one or more projected movements of the moving object.

2. The computer-implemented method of claim 1, further including:
determining, by the one or more processors, the intersection between the flight trajectory and the one or more projected movements of the moving object based on the determined object movement data and the received flight trajectory.

3. The computer-implemented method of claim 1, further including:
determining, by the one or more processors, a conflict segment along the flight trajectory and a conflict predicted time based on the intersection between the flight trajectory and the one or more projected movements of the moving object.

4. The computer-implement method of claim 3, further including:
determining, by the one or more processors, the aircraft estimated time of arrival at the determined conflict segment.

5. The computer-implemented method of claim 1, further including:
comparing, by the one or more processors, the aircraft estimated time of arrival at the intersection and a moving object estimated time of arrival window at the intersection; and
based on the comparing, determining, by the one or more processors, whether a conflict exists between the aircraft and the moving object.

6. The computer-implemented method of claim 5, further including:
if a conflict exists, dynamically determining, by the one or more processors, one or more reliability metrics, one or more dynamic conflict times, and one or more dynamic conflict locations, the one or more reliability metrics indicative of a likelihood that the one or more dynamic conflict times and the one or more conflict locations are accurate predictions for the moving object and the aircraft.

7. The computer-implemented method of claim 5, further including:
if a conflict exists, determining, by the one or more processors, whether an action is required to resolve the conflict;
if an action is required, determining, by the one or more processors, the required action; and
outputting, by the one or more processors, the required action.

8. The computer-implemented method of claim 7, wherein the required action includes modifying, by the one or more processors, the flight trajectory of the aircraft to avoid the moving object.

9. The computer-implemented method of claim 1, wherein the object characteristic parameters of the moving object include at least one of a size, location, severity, or speed of the moving object.

10. A computer system for dynamically detecting aircraft trajectory conflicts against a moving object, comprising:
a memory having processor-readable instructions stored therein; and
at least one processor configured to access the memory and execute the processor-readable instructions, which when executed by the processor configures the processor to perform a plurality of functions, including functions for:
receiving one or more environmental inputs, the one or more environmental inputs including one or more object characteristic parameters of the moving object;
determining object movement data indicative of one or more projected movements of the moving object, based on the one or more environmental inputs;
receiving a flight trajectory of an aircraft; and
dynamically determining an aircraft estimated time of arrival at an intersection between the flight trajectory and the one or more projected movements of the moving object.

11. The computer system of claim 10, wherein the functions further include functions for:
determining the intersection between the flight trajectory and the one or more projected movements of the moving object based on the determined object movement data and the received flight trajectory.

12. The computer system of claim 10, wherein the functions further include functions for:
determining a conflict segment along the flight trajectory and a conflict predicted time based on the intersection between the flight trajectory and the one or more projected movements of the moving object.

13. The computer system of claim 12, wherein the functions further include functions for:
determining the aircraft estimated time of arrival at the determined conflict segment.

14. The computer system of claim 10, wherein the functions further include functions for:
comparing the aircraft estimated time of arrival at the intersection and a moving object estimated time of arrival window at the intersection; and
based on the comparing, determining whether a conflict exists between the aircraft and the moving object.

15. The computer system of claim 14, wherein the functions further include functions for:
if a conflict exists, dynamically determining one or more reliability metrics, one or more dynamic conflict times, and one or more dynamic conflict locations, the one or more reliability metrics indicative of a likelihood that the one or more dynamic conflict times and the one or more conflict locations are accurate predictions for the moving object and the aircraft.
